**Europäisches Patentamt**

**European Patent Office**

**Office européen des brevets**

(11) Veröffentlichungsnummer: **0 093 234**
**A1**

## (12) EUROPÄISCHE PATENTANMELDUNG

(21) Anmeldenummer: **83101458.4**

(51) Int.Cl.³: **H 01 Q 25/04**

(22) Anmeldetag: **16.02.83**

(30) Priorität: **05.05.82 DE 3216708**

(43) Veröffentlichungstag der Anmeldung:
**09.11.83** Patentblatt **83/45**

(84) Benannte Vertragsstaaten:
**AT DE FR GB**

(71) Anmelder: **ANT Nachrichtentechnik GmbH**
**Gerberstrasse 33**
**D-7150 Backnang(DE)**

(72) Erfinder: **Mörz, Günter, Dr.**
**Moserstrasse 19**
**D-7140 Ludwigsburg(DE)**

(74) Vertreter: **Schickle, Gerhard, Dipl.-Ing. et al,**
**ANT Nachrichtentechnik GmbH Patent- und**
**Lizenzabteilung Gerberstrasse 33**
**D-7150 Backnang(DE)**

(54) **Verfahren zur Gewinnung von Antennennachführsignalen.**

(57) Verfahren zur Gewinnung von Steuersignalen zum Nachführen einer Antenne mit Hilfe eines Summensignals ($\Sigma$) und nur eines in Polarkoordinaten orientierten Differenzsignals ($\Delta$), so daß allein die Detektion der Amplitude des durch die Kombination des Summen- und des Differenzsignals entstandenen Signals ausreicht, um Steuersignale abzuleiten. Dabei wird das Differenzsignal einer zyklischen Phasenänderung mit mindestens drei verschiedenen Phasenzuständen unterworfen.

FIG.1

EP 0 093 234 A1

- 1 -

AEG-TELEFUNKEN                          PTL-BK/Th/ma
NACHRICHTENTECHNIK GmbH                 BK 82/11
Gerberstr. 33
D-7150 Backnang


## Verfahren zur Gewinnung von Antennennachführsignalen

Die vorliegende Erfindung betrifft ein Verfahren zur Gewinnung
von Steuersignalen zum Nachführen einer Antenne auf eine Signalquelle, wobei aus dem von der Antenne empfangenen Signal
ein Summen- und ein Differenzsignal abgeleitet, das Differenzsignal einer zyklischen Phasenänderung unterworfen und dieses
sich in seiner Phase ändernde Differenzsignal dem Summensignal überlagert wird, wodurch ein Signal entsteht, aus dem
Steuergrößen für die Nachführung der Antenne in die Soll-
Richtung abgeleitet werden.

Z.B. im Satellitenfunk oder bei Radaranlagen werden Reflektorantennen mit Eigennachführungssystemen zur Zielverfolgung
ausgestattet. Weit verbreitet sind hierbei Systeme, die nach
dem sogenannten Monopulsverfahren arbeiten (vgl. z.B. DE-OS
19 36 692). Bei diesem Verfahren werden aus mindestens zwei
verschiedenen Strahlungsdiagrammen Kriterien für die Abweichung der elektrischen Antennenachse von der Soll-Richtung
abgeleitet. Das normale Antennendiagramm, das mit seinem
Feldstärkemaximum in der elektrischen Achse der Antenne liegt, dient als Referenzdiagramm. Das bzw. die zusätzlich erzeugten Strahlungsdiagramme - Differenzdiagramme genannt - weisen in der elektrischen Achse eine Feldstärkenullstelle und eine Phasenumkehr auf. Mit Hilfe des Referenzdiagramms, das auch als Summendiagramm bezeichnet wird, und des bzw. der Differenzdiagramme lassen sich durch kohärente Demodulation ablageproportionale Signale erzeugen, die für die Nachführung der Antenne auf ihr Ziel ausnutzbar sind. Die Summen- und Differenzdiagramme werden entweder aus den Strahlungsdiagrammen verschiedener im Speisesystem der Antenne angeregter Wellentypen erzeugt, man spricht dann von Mehrmoden-Monopulsverfahren, oder durch die Summen oder Differenzbildung der Empfangssignale mehrerer Einzelerreger. Von dem zuletzt genannten Verfahren wird in Electronics, 1. Mai 1967, S. 80 bis 86, ausgegangen. Hierbei werden aus den Empfangssignalen von vier Einzelerregern zwei Differenzsignale abgeleitet, die in Richtung der kartesischen Koordinaten x und y orientiert sind. Die Ablageinformation wird ermittelt, indem abwechselnd diese beiden Differenzsignale dem Summensignal überlagert werden, wobei jedes Differenzsignal einer zyklischen Phasenänderung mit den zwei Phasenzuständen 0° und 180° unterworfen wird.

Sofern es sich um eine Übertragung von linear polarisierten Signalen handelt, sind für die Herleitung der Ablageinformation, wie oben beschrieben, zwei Differenzsignale erforderlich.

Bei zirkularer Polarisation aber reicht zu diesem Zweck ein einziges in Polarkoordinaten orientiertes Differenzsignal aus. Ein solches in Polarkoordinaten orientiertes Diferenzsignal kann aus einer zirkularen Feldverteilung (z.B. der $H_{01}$-Welle) im Antennespeisesystem oder aus der radialen Feldverteilung (z.B. der $E_{01}$-Welle) gewonnen werden. Es sei erwähnt, daß auch bei linearer Polarisation ein in Polarkoordinaten orientiertes Differenzsignal durch Vektoraddition aus den zwei in kartesischen Koordinaten x und y orientierten Differenzsignalen gewonnen werden kann.

Der Erfindung liegt nun die Aufgabe zugrunde, ein Verfahren
der eingangs genannten Art anzugeben, wobei nur ein in Polarkoordinaten orientiertes Differenzsignal erforderlich und
allein die Detektion der Amplitude des durch die Kombination
des Summen- und des Differenzsignals entstandenen Signale
ausreicht, um Steuersignale für die Nachführung der Antenne
zu gewinnen.

Erfindungsgemäß wird die Aufgabe dadurch gelöst, daß die zyklische Phasenänderung, der das Differenzsignal ausgesetzt
wird, mindestens drei verschiedene Phasenzustände aufweist.

Eine zweckmäßige Ausführung des erfindungsgemäßen Verfahrens
und vorteilhafte Anordnungen zur Durchführung des Verfahrens
gehen aus den Unteransprüchen hervor.

Anhand von in der Zeichnung dargestellten Ausführungsbeispielen wird nun die Erfindung näher erläutert. Es zeigen:

Fig. 1 und 2  zwei Schaltungsanordnungen zur Kombination des
              Summensignals mit dem zyklischen Phasenänderungen unterworfenen Differenzsignal und
Fig. 3a, b    die Kombination von Summen- und Differenzsignal darstellende Vektordiagramme.

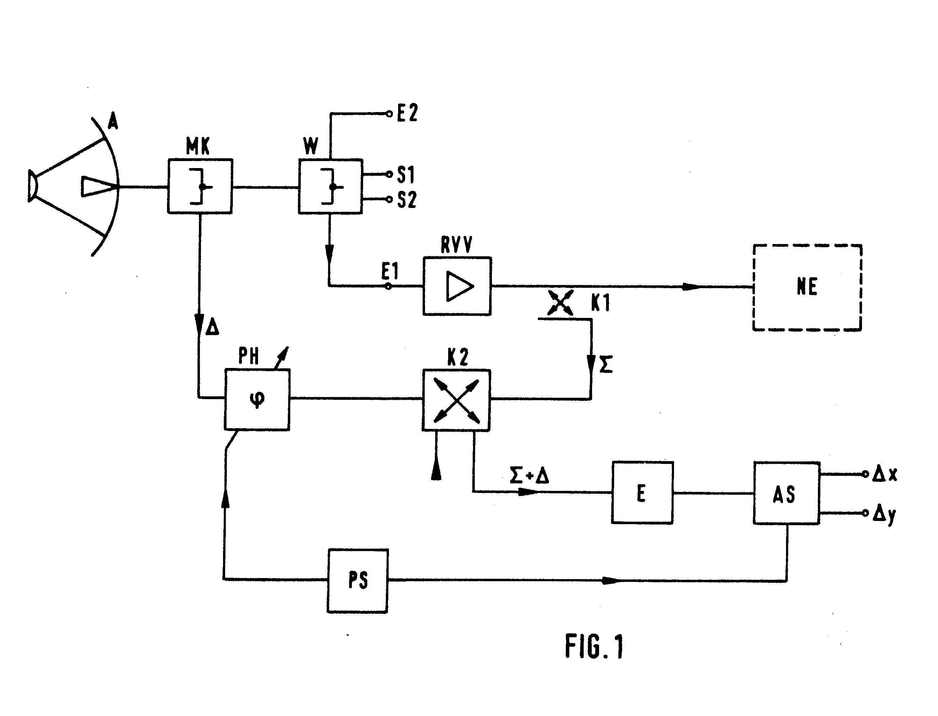

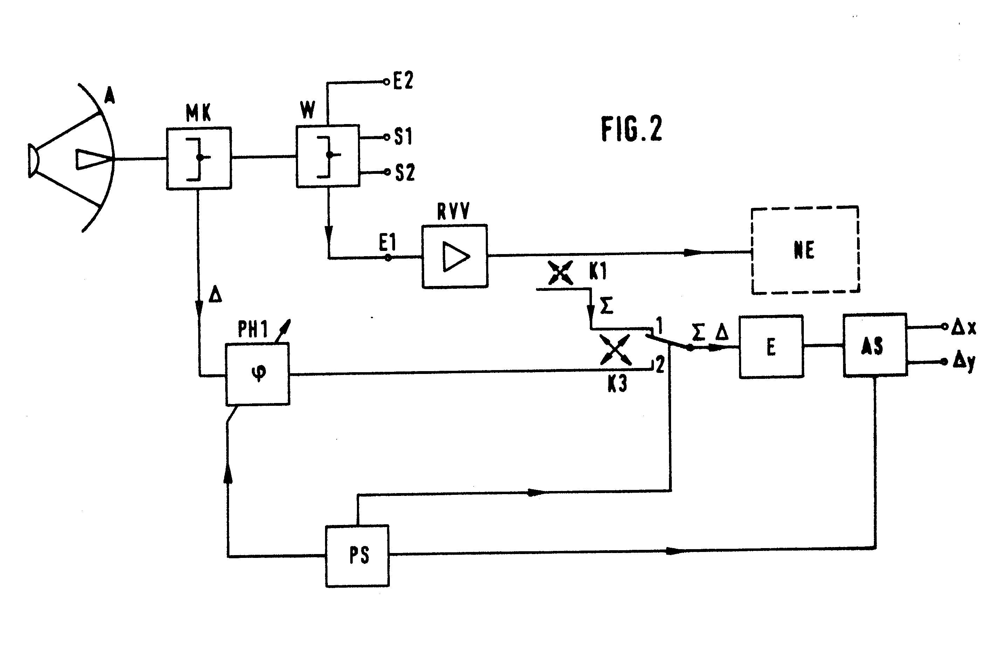

Beide in den Fig. 1 und Fig. 2 gezeigten Ausführungsbeispiele besitzen folgenden prinzipiellen Schaltungsaufbau:
An den Erreger einer Antenne A, z.B. einer Cassegrain-Antenne, ist ein Modenkoppler MK zur Auskopplung des in Polarkoordinaten orientierten Differenzsignals Δ angeschlossen. Ein solcher Modenkoppler ist bekannt aus G. Mörz, Dissertation an der RWTH Aachen, D 82, 1978.

Häufig arbeiten Antennen im kombinierten Sende-Empfangsbetrieb, wobei eine Doppelausnutzung jedes der Frequenzbänder durch die Verwendung orthogonaler Polarisation erreicht
wird. Um die verschiedenen Empfangssignale E1, E2 und Sendesignale S1, S2 voneinander zu trennen, befindet sich hinter
dem Modenkoppler MK eine Weiche W zur Aufspaltung der Frequenzbänder und Polarisationen.

In der Regel wird in Richtung der nachführbaren Antenne ein
unmodulierter Träger, auch Bakensignal genannt, ausgesendet.
Bei den vorliegenden Ausführungsbeispielen sei ein Bakensignal im Empfangsweg mit dem Signal E1 empfangen worden. Nachdem das Signal E1 in einem rauscharmen Vorverstärker RVV verstärkt worden ist, wird davon mittels des Kopplers K1 ein
als Summensignal Σ dienender Teil abgespalten. Der andere
Anteil des Signals E1 gelangt zu einem Nachrichtenempfänger
NE.

Das Summensignal Σ wird in einem Koppler K2 bzw. K3 dem
Differenzsignal Δ , das in einem Phasenglied PH bzw. PH1
zyklische Phasenänderungen erfährt, überlagert. Das hierdurch entstandene Signal Σ + Δ wird dann einem Empfänger E
und einer Auswerteschaltung A zugeführt, die aus dem Signal Σ + Δ Steuergrößen Δx und Δy für das Servonachführsystem der Antenne ableitet. Nach welchem Prinzip die Auswertung des Signals Σ + Δ erfolgt, wird weiter unten erläutert.

Eine Phasensteuerung PS veranlaßt die zyklische Schaltung des Phasengliedes PH bzw. PH1 in die verschiedenen
Phasenzustände.

Das Phasenglied PH der in der Fig. 1 dargestellten Anordnung weist die vier Phasenzustände 0°, 90°, 180° und 270°
auf. Dagegen besitzt das Phasenglied PH1 der in der Fig. 2
dargstellten Anordnung nur die zwei Phasenzustände 0° und
90°. Um auch hier das Differenzsignal einer 180° und 270°
Phasendrehung aussetzen zu können, ist der Koppler K3, in dem Summen- und Differenzsignal miteinander kombiniert werden, als 3 dB-Richtungskoppler oder magisches T ausgeführt. Der 3 dB-Richtungskoppler bzw. das magische T hat die Eigenschaft, daß an einem Ausgangstor 1 die Summe ($\Sigma + \Delta$) der beiden an die Eingangstore angelegten Signale erscheint und am anderen Ausgangstor 2 die Differenz ($\Sigma - \Delta$). D.h. also, bei einer Einstellung des Phasengliedes PH1 auf die Phasenlage von 0° erscheint am Ausgangstor 1 des Kopplers K3 die Summe aus dem um 0° phasenverschobenen Differenzsignal $\Delta$ und dem Summensignal $\Sigma$ , während am Ausgangstor 2 die Summe aus dem um 180° phasenverschobenen Differenzsignal $\Delta$ und dem Summensignal $\Sigma$ erscheint. Hat das Phasenglied die Phasenlage 90°, dann ist am Ausgangstor 1 des Kopplers K3 die Summe aus dem um 90° phasenverschobenen Differenzsignal $\Delta$ und dem Summensignal $\Sigma$ und am Ausgangstor 2 die Summe aus dem um 270° phasenverschobenen Differenzsignal $\Delta$ und dem Summensignal $\Sigma$ abgreifbar. Die Phasensteuerung PS sorgt für die richtige zyklische Phaseneinstellung des Phasengliedes PH1 und Anschaltung des Empfängers E an die Tore 1 und 2 des Kopplers K3.

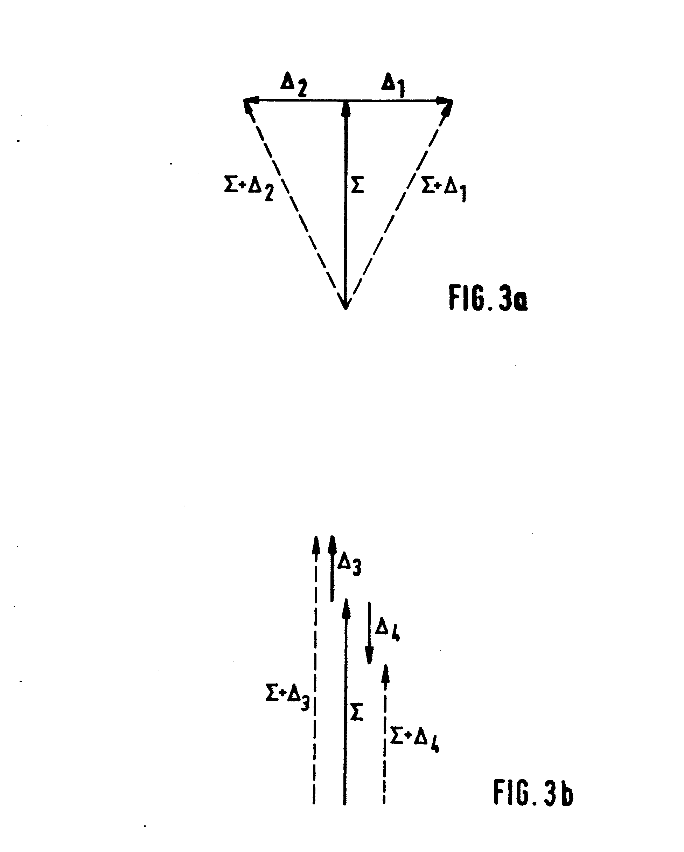

Anhand der in den Fig. 3a und 3b dargestellten Vektordiagramme soll nun erläutert werden, wie aus der Überlagerung des Summensignals $\Sigma$ und des Differenzsignals $\Delta$ eine Information über die Ablage der Antenne aus der Soll-Richtung resultiert.

Für die Erläuterung wird willkürlich vorausgesetzt, daß die Phasenrelation zwischen dem Summensignal $\Sigma$ und dem Differenzsignal $\Delta$ so gewählt ist, daß das in Polarkoordinaten orientierte Differenzsignalbei einem Polwinkel $\varphi_{Pol}$ = 0° mit dem Summensignal einen Winkel von 90° einschließt. Außerdem sei vereinfachend angenomen, daß bei den in Fig. 3a und 3b gezeigten Fällen der Betrag der Antennenablage konstant bleibt und zunächst der Polwinkel $\varphi_{Pol}$ = 0° ist. D.h. es wird von einer Ablage in nur einer Richtung, der positiven x-Richtung im kartesischen Koordintensystem, ausgegangen.

Die Fig. 3a zeigt die vektorielle Addition des Summensignals $\Sigma$ und des Differenzsignals $\Delta$, wobei $\Delta_1$ das nicht phasenverschobene und $\Delta_2$ das um 180° phasenverschobene Differenzsigal kennzeichnet. Es zeigt sich, daß die aus der Überlagerung entstandenen Signale $\Sigma + \Delta_1$ und $\Sigma + \Delta_2$ gleiche Amplituden besitzen. Eine Amplitudenänderung findet also bei einem Wechsel der Phasenlage des Differenzsignals von 0° auf 180° bzw. umgekehrt nicht statt.

Anders ist es beim in der Fig. 3b dargestellten Fall, wo mit $\Delta_3$ das um 90° phasenverschobene Differenzsignal und mit $\Delta_4$ das um 270° phasenverschobene Differenzsignal bezeichnet ist. Hier stellt sich ein sehr starker Amplitudenunterschied der aus der Überlagerung resultierenden Signale $\Sigma + \Delta_3$ und $\Sigma + \Delta_4$ ein. Und zwar findet beim Wechsel der Phase des Differenzsignals von 90° auf 270° ein Sprung von dem Signal $\Sigma + \Delta_3$ mit großer Amplitude auf das Signal $\Sigma + \Delta_4$ mit kleiner Ampltide statt.

Ändert sich nun der Polwinkel auf $\varphi_{Pol}$ = 180° - d.h. es liegt eine Ablage in negativer x-Richtung vor - so findet beim Wechsel der Phase des Differenzsignals von 90° auf 270° ein Sprung von dem Signal $\Sigma + \Delta_4$ mit kleiner Amplitude auf das Signal $\Sigma + \Delta_3$ mit großer Amplitude statt. Denn bei $\varphi_{Pol}$ = 180° entspricht $\Delta_3$ in der Fig. 3b dem um 270° phasenverschobenen Differenzsignal und $\Delta_4$ dem um 90° phasenverschobenen Differenzsignal. Der Betrag des Amplitudensprunges gibt also die Größe der Ablage und das Vorzeichen die Richtung der Ablage wieder.

In ähnlicher Weise läßt sich auch eine Ablage in positiver bzw. negativer y-Richtung ermitteln. Man kann dabei ebenso von dem in Fig. 3b dargestellten Vektordiagramm ausgehen. Für $\varphi_{Pol}$ = 90° (Ablage in positiver y-Richtung) stellt $\Delta_3$ das um 0° phasenverschobene und $\Delta_4$ das um 180° phasenverscho-

bene Differenzsignal dar, wogegen für $\varphi_{Pol}$ = 180° (Ablage in negativer y-Richtung) $\Delta_3$ das um 180° phasenverschobene und $\Delta_4$ das um 0° phasenverschobene Differenzsignal kennzeichnet.

Die Auswerteschaltung A registriert jeweils den Betrag und das Vorzeichen der nach jeder Phasenumschaltung des Phasengliedes entstandenen Amplitudenänderung des Signals $\Sigma + \Delta$ und bildet daraus Steuersignale $\Delta x$ und $\Delta y$ für die Nachführung der Antenne in x- und y-Richtung.

In der voranstehenden Beschreibung ist von vier verschiedenen Phasenzuständen des Phasengliedes ausgegangen worden, die nötig sind, um die Steuersignale für die Nachführung herzuleiten. Durch Rechnung, die von einem Digitalrechner erledigt werden kann, können auch aus den Amplitudenänderungen des Signals $\Sigma + \Delta$, die auf nur drei Phasensprünge des Phasengliedes zurückzuführen sind, sämtliche erforderlichen Steuersignale ermittelt werden.

AEG-TELEFUNKEN                        PTL-BK/Th/ma
Nachrichtentechnik GmbH               BK 82/11
Gerberstr. 33

D-7150 Backnang


Patentansprüche


1. Verfahren zur Gewinnung von Steuersignalen zum Nachführen
   einer Antenne auf eine Signalquelle, wobei aus dem von der
   Antenne empfangenen Signal ein Summen- und ein Differenzsignal abgeleitet, das Differenzsignal einer zyklischen
   Phasenänderung unterworfen und dieses sich in seiner Phase ändernde Differenzsignal dem Summensignal überlagert
   wird. wodurch ein Signal entsteht, aus dem Steuergrößen
   für die Nachführung der Antenne in die Soll-Richtung abgeleitet werden, dadurch gekennzeichnet, daß die zyklische Phasenänderung, der das Differenzsignal ($\Delta$) ausgesetzt wird, mindestens drei verschiedene Phasenzustände
   aufweist.


2. Verfahren nach Anspruch 1, dadurch gekennzeichnet, daß eine Phasenänderung des Differenzsignals ($\Delta$) mit den Phasenzuständen 0°. 90°. 180° und 270° vorgenommen wird.

3. Anordnung zur Durchführung des Verfahrens nach einem der
   vorhergehenden Ansprüche, dadurch gekennzeichnet, daß das
   aus dem Antennenspeisesystem ausgekoppelte Differenzsignal
   ( $\Delta$ ) an ein steuerbares, mindestens drei verschiedene diskrete Phasenzustände aufweisendes Phasenglied (PH) geführt
   ist, dessen Ausgang mit einem Eingangstor eines Kopplers
   (K2) verbunden ist, daß an ein zweites Eingangstor dieses
   Kopplers das aus dem Empfangssignal ausgekoppelte Summensignal ( $\Sigma$ ) gelegt ist und daß das Ausgangstor des Kopplers
   (K2) an eine Auswerteschaltung (AS) angeschlossen ist, die
   aus dem kombinierten Summen- und Differenzsignal ( $\Sigma + \Delta$ ) die
   Steuergrößen ( $\Delta x$ , $\Delta y$ ) für die Nachführung der Antenne ableitet.

4. Anordnung zur Durchführung des Verfahrens nach einem der
   vorhergehenden Ansprüche, dadurch gekennzeichnet, daß das
   aus dem Antennenspeisesystem ausgekoppelte Differenzsignal
   ( $\Delta$ ) an ein steuerbares, die Phasenzustände 0° und 90° aufweisendes Phasenglied (PH1) geführt ist, dessen Ausgang
   mit einem Eingangstor eines 3 dB-Richtungskopplers (K3)
   verbunden ist, daß an das andere Eingangstor dieses Kopplers
   das aus dem Empfangssignal ausgekoppelte Summensignal ( $\Sigma$ )
   gelegt ist und daß eine Auswerteschaltung (AS), die aus dem
   im Koppler (K3) kombinierten Summen- und Differenzsignal
   ( $\Sigma + \Delta$ ) die Steuergrößen ( $\Delta x$ , $\Delta y$ ) für die Antennennachführung ableitet, abwechselnd, wenn das Phasenglied (PH1) den
   Phasenzustand 0° und wenn es den Phasenzustand 90° hat,
   an die zwei Ausgangstore (1, 2) des 3 dB-Richtungskopplers
   geschaltet ist.

0093234

FIG.1

FIG.2

0093234

$\Delta_2$   $\Delta_1$

$\Sigma + \Delta_2$   $\Sigma$   $\Sigma + \Delta_1$

FIG. 3a

$\Delta_3$

$\Delta_4$

$\Sigma + \Delta_3$   $\Sigma$   $\Sigma + \Delta_4$

FIG. 3b

Europäisches
Patentamt

**EUROPÄISCHER RECHERCHENBERICHT**

**0093234**
Nummer der Anmeldung

EP 83 10 1458

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 215 745 (SECRETARY OF STATE FOR DEFENCE) * Figuren 2, 5; Anspruch 1 * | 1 | H 01 Q 25/04 |
| A | DE-A-2 935 136 (SIEMENS) * Figur 2 * | | |
| A,D | DE-A-1 936 692 (MARCONI) * Figur 7 * | | |
| A,D | ELECTRONICS, 1. Mai 1967 A.P. NOTTHOFF "Apollo antenna fastens on the beam to the moon", Seiten 80-86 * Seiten 85-86 * | | |

RECHERCHIERTE
SACHGEBIETE (Int. Cl. ³)

H 01 Q 3/08
H 01 Q 25/04

Der vorliegende Recherchenbericht wurde für alle Patentansprüche erstellt.

| Recherchenort BERLIN | Abschlußdatum der Recherche 26-07-1983 | Prüfer BREUSING J |
|---|---|---|